# EUROPEAN PATENT APPLICATION

(11) **EP 2 642 792 A2**
(43) Date of publication of application: **25.09.2013**
(21) Application number: 12006353.2
(22) Date of filing: 10.09.2012
(51) Int. Cl.: H04W 36/14

(54) **Power savings in a mobile communications device through dynamic control of processed bandwidth**

(30) Priority: 19.03.2012 US 201213423375
(71) Applicant: Broadcom Corporation, Irvine, CA 92617 (US)
(72) Inventor: Carmon, Rafael, 75676 Rishon Lezion (IL); Frand, Ohad, 53486 Givataim (IL)
(74) Representative: Jehle, Volker Armin

(57) **Abstract**

User equipment (UE) in a cellular communication system is capable of both high data rate uses such as streaming video and low data rate uses such as voice. UE in accordance with the disclosure camps on to a cell with a narrow bandwidth downlink when its data rate requirements are low, rather than a cell with a wide bandwidth download. Since the computational burden of processing the narrow bandwidth downlink signals is less than that for processing the wide bandwidth downlink signals, a power reduction in the UE is realized from the reduced computational load. A normal handover between cells with wide and narrow bandwidth downlinks can be used. Alternatively, a single cell can dynamically change its downlink bandwidth resulting in a reduced computational load and reduced power consumption in the UE.

## Description

### Field of the Invention

The present invention relates generally to mobile communications, and more particularly relates to reducing power consumption in mobile communications devices with temporarily low data rate requirements.

### Background

Advances in semiconductor manufacturing technology and digital systems architecture have provided designers with the capability to produce electronic devices having both significant computational resources and large amounts of volatile and non-volatile memory, at relatively affordable prices for the consumer marketplace. Similar advancements in modulation schemes, antenna design, and battery technology have enabled the design and production of affordable and highly useful mobile communications devices. Examples of such mobile communications devices include mobile phones, smartphones, and so on.

Mobile phones, and particularly smartphones, take advantage of the very substantial computing power of advanced semiconductor chips to implement a wide variety of applications. Indeed, a significant industry has formed to provide software applications, as well as digital content to such mobile devices. However, there is another important use for the computing power found in mobile devices, and that is conducting wireless communication with one or more base stations. Part of the computational load required in conducting wireless communication with one or more base stations involves high-level management of various call functions, data streams, web browsing, emailing, screen displays, and so on. Another part of the computational load required in conducting wireless communication with one or more base stations involves signal processing. While radio circuitry was at one time entirely analog, modem radio architectures typically convert incoming RF signals to the digital domain very early in the processing stage in order to apply sophisticated digital signal processing algorithms.

As noted above, modern semiconductor manufacturing technology provides transistors that are small enough and fast enough to produce chips capable of handling these advanced signal processing tasks. Unfortunately, these small, fast transistors, when packed into chips with many millions or even hundreds of millions of other transistors consume so much power, that both dissipating the waste heat and maintaining suitable battery life have become serious issues.

What is needed are methods and apparatus for reducing the amount of power that is consumed by mobile devices.

### BRIEF SUMMARY OF THE INVENTION

According to an aspect, a method is provided of reducing power consumption in a mobile communications device, comprising:
determining, at a first base station having a first downlink bandwidth, a data transfer rate requirement for a mobile communications device; and
determining, at the first base station, whether to hand-off the mobile communications device to a second base station having a second downlink bandwidth;
wherein the first downlink bandwidth and the second downlink bandwidth are different from each other.

Advantageously, the first downlink bandwidth is greater than the second downlink bandwidth.

Advantageously, the first downlink bandwidth is less than the second downlink bandwidth.

Advantageously, the first downlink bandwidth and the second downlink bandwidth are each selected from one of the downlink bandwidths specified in Release 8 of the LTE standard.

Advantageously, the first downlink bandwidth and the second downlink bandwidth are each selected from the group of downlink bandwidths consisting of nominally 1.4 MHz, nominally 3 MHz, nominally 5 MHz, nominally 10 MHz, nominally 15 MHz, nominally 20 MHz, and nominally 40 MHz.

Advantageously, determining the data transfer rate requirement for one or more mobile communications devices comprises monitoring the activity of the one or more mobile communications devices.

Advantageously, determining whether to hand off the mobile communications device to the second base station comprises comparing the data transfer rate requirements of the mobile communications device to the first downlink bandwidth and the second downlink bandwidth.

Advantageously, the method further comprises:
handing off the mobile communications device from the first base station to the second base station;
wherein the second downlink bandwidth is less than the first downlink bandwidth.

Advantageously, the method further comprises:
handing off the mobile communications device from the first base station to the second base station;
wherein the second downlink bandwidth is greater than the first downlink bandwidth.

Advantageously, a common Radio Resource Manager software layer manages at least some aspects of both the first base station and the second base station.

According to an aspect, a method of reducing power consumption in a mobile communications device comprises:
receiving and processing downlink signals at a mobile communications device;
determining, at the mobile communications device, that its traffic load is light and that it is in communication with a wide bandwidth cell; and
transmitting, from the mobile communications device, a request to be handed off to a narrow bandwidth cell.

Advantageously, the mobile communications devices are operable to process downlink signals at a plurality of downlink bandwidths, and a plurality of modulation schemes.

Advantageously, the plurality of downlink bandwidths comprises nominally 1.4 MHz, nominally 3 MHz, nominally 5 MHz, nominally 10 MHz, nominally 15 MHz, nominally 20 MHz, and nominally 40 MHz.

Advantageously, the plurality of modulation schemes comprises at least one of QPSK, 16QAM, and 64QAM.

According to an aspect, a method of reducing power consumption in a mobile communications device comprises:
determining, at a first base station having a first downlink bandwidth, a data transfer rate requirement for a mobile communications device; and
determining, at the first base station, whether to change to a second downlink bandwidth at the first base station;
wherein the first downlink bandwidth and the second downlink bandwidth are different from each other.

According to an aspect, a non-transitory computer-readable medium is provided having stored thereon, a computer program having at least one code section executable by a machine, said at least one code section enabling:
determining, at a first base station having a first downlink bandwidth, a data transfer rate requirement for a mobile communications device; and
determining, at the first base station, whether to hand off the mobile communications device to a second base station having a second downlink bandwidth;
wherein the first downlink bandwidth and the second downlink bandwidth are different from each other.

Advantageously, determining the data transfer rate requirement for the mobile communications device comprises monitoring the activity of the mobile communications device.

Advantageously, determining whether to hand off the mobile communications device to a second base station comprises comparing the data transfer rate requirements of the mobile communications device to the first downlink bandwidth and the second downlink bandwidth.

Advantageously, the method further comprises:
handing off the mobile communications device from the first base station to the second base station;
wherein the second downlink bandwidth is less than the first downlink bandwidth.

Advantageously, the method further comprises:
handing off the mobile communications device from the first base station to the second base station;
wherein the second downlink bandwidth is greater than the first downlink bandwidth.

### BRIEF DESCRIPTION OF THE DRAWINGS

Embodiments of the invention are described with reference to the accompanying drawings. In the drawings, like reference numbers indicate identical or functionally similar elements. Additionally, the left most digit(s) of a reference number identifies the drawing in which the reference number first appears.

Fig. 1 is a block diagram of a mobile communication system including a base station and a plurality of mobile communications devices communicatively coupled to the base station.

Fig. 2 is a block diagram of a mobile communication system including a first base station and a second base station, each of the base stations providing a different downlink bandwidth, and a plurality of mobile communications devices communicatively coupled to either the first base station or the second base station.

Fig. 3 is a block diagram of a mobile communication system including a base station operable to provide at least two different downlink bandwidths to a plurality of mobile communications devices communicatively coupled to the base station.

Fig. 4 is a flow diagram illustrating a method of reducing power consumption in mobile communications devices by handing off mobile communications devices with low data rate requirements from a base station having a wide bandwidth downlink to a base station having a narrow bandwidth downlink, thus reducing the computational load in the mobile communications device and consequently its power consumption.

Fig. 5 is a flow diagram illustrating a method of reducing power consumption in mobile communications devices wherein a mobile communications device requests a hand off to a base station with a downlink bandwidth that is matched to its data transfer rate requirements.

Fig. 6 is a flow diagram illustrating a method of reducing power consumption in mobile communications devices by dynamically changing the bandwidth provided to mobile communications devices with low data rate requirements thus reducing the computational load in those mobile communications devices and consequently their power consumption.

DETAILED DESCRIPTION

The following Detailed Description refers to accompanying drawings to illustrate exemplary embodiments consistent with the invention. References in the Detailed Description to "one exemplary embodiment," "an illustrative embodiment", "an exemplary embodiment," and so on, indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other embodiments are possible, and modifications may be made to the exemplary embodiments within the spirit and scope of the invention. Therefore, the Detailed Description is not meant to limit the invention. Rather, the scope of the invention is defined only in accordance with the subjoined Claims and their equivalents.

The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the spirit and scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Terminology

The terms, chip, die, integrated circuit, semiconductor device, and microelectronic device, are often used interchangeably in the field of electronics. The present invention is applicable to all the above as these terms are generally understood in the field.

With respect to chips, it is common that power, ground, and various signals may be coupled between them and other circuit elements via physical, electrically conductive connections. Such a point of connection may be referred to as an input, output, input/output (I/O), terminal, line, pin, pad, port, bump, contact, interface, or similar variants and combinations. Although connections between and amongst chips are commonly made by way of electrical conductors, those skilled in the art will appreciate that chips and other circuit elements may alternatively be coupled by way of optical, mechanical, magnetic, electrostatic, and electromagnetic interfaces.

The expression "mobile communications device", as used herein refers generally to an electronic product such as, but not limited to, mobile phones, mobile handsets, cellular phones, smartphones, and e-readers with cellular communication capability. The expressions "mobile station" and "mobile handset" may be used as alternative expressions for mobile communications device in the context of this disclosure.

The acronym 3GPP refers to Third Generation Partnership Project.

The acronym FDD refers to Frequency Division Duplexing.

The acronym FFT refers to Fast Fourier Transform.

The acronym GSM refers to Global System for Communication, which is a standard second generation digital cellular networks.

The acronym iFFT refers to inverse Fast Fourier Transform.

The acronym LTE refers to Long Term Evolution.

The acronym LTE-A refers to Long Term Evolution-Advanced.

The acronym MIMO refers to Multiple Input and Multiple Output, which is a wireless communication hardware arrangement in which multiple transmit antennas and multiple receiver antennas are used to improve communications performance.

The acronym OFDMA refers to Orthogonal Frequency Division Multiple Access.

The acronym QAM refers to Quadrature Amplitude Modulation. 16QAM is a modulation scheme that provides a symbol that may be in any one of 16 states, thus encoding 4 bits per symbol. 64QAM is a modulation scheme that provides a symbol that may be in any one of 64 states, thus encoding 6 bits per symbol.

The acronym QPSK refers to Quadrature Phase Shift Keying.

The acronym RRM refers to Radio Resource Management.

The acronym TDD refers to Time Division Duplexing.

The acronym UE refers to User Equipment. UE includes, but is not limited to, mobile phones, mobile communications devices, smartphones, and similar handsets.

The acronym UMTS refers to Universal Mobile Telecommunications System, which is a third generation mobile cellular technology for networks based on GSM.

The acronym VoIP refers to Voice over IP, which provides voice calls over IP networks such as the Internet.

The term "real-time" refers to actions, including but not limited to transmissions from a communication device, that cannot be delayed or rescheduled without noticeably affecting a quality of a service to those actions are directed. Actions that can be delayed or rescheduled are referred to as "non-real-time".

Overview

The 3GPP LTE standard provides for operation of cells, consistent with the standard, that operate at different bandwidths/data rates. It is noted that in an LTE network, the user equipment, e.g., mobile communications device, needs to process the full bandwidth of the RF downlink signal. This situation can result in wasted power when an LTE-compliant mobile communications device having relatively low data rate requirements is in an LTE cell with a relatively higher downlink bandwidth and data rate. For example, when a mobile communications device engaged in a voice call (or similar activity with relatively low data rate requirements) communicates with a high capacity LTE base station having a 20 MHz downlink bandwidth and a 150Mbs data rate, that mobile communications device needs to process the 20 MHz downlink bandwidth of the RF signal just to retrieve the bits required for the voice call (or similar relatively low data rate activity). Since the number of bits needed for the voice call does not require the 150 Mbps data rate mentioned above, the power consumed to process the excess bandwidth is wasted. That power consumption results not only from the computational load required for digital signal processing, but also from other circuitry of mobile communications devices because the wider bandwidth requires A/D and D/A sampling at correspondingly higher rates, as well as various circuit interfaces having to operate at higher speeds.

Embodiments in accordance with the present disclosure reduce the computational load in mobile communications devices that do not require a wide bandwidth downlink by handing those devices off to a geographically overlapping cell with a narrower bandwidth downlink. The computational load associated with processing the narrow bandwidth downlink is less than that for processing the wide bandwidth downlink. Since a reduced computational load results in lower power consumption within the mobile communications device, the benefits associated with lower power operation, including but not limited to longer battery life, are obtained.

In accordance with the LTE standard (LTE Release 8, December 2008, by the Third Generation Partnership Project), LTE cellular base stations use OFDMA as the access scheme, and may select a downlink bandwidth from among the several downlink bandwidths specified in the standard. These bandwidths include 1.4 MHz on the low end, 3 MHz, 5 MHz, 10 MHz, 15 MHz, and 20 MHz on the high end. It will be appreciated that although these downlink bandwidths are identified by reference to exact numbers, actual systems will provide downlink bandwidths that may vary slightly due to normal manufacturing and operating tolerances. In order to make clear that the present invention contemplates implementations wherein variations in downlink bandwidth may result from manufacturing and/or operating tolerances, these bandwidths are referred to as nominal, or as nominally being a particular bandwidth. In some embodiments, a downlink bandwidth of 40 MHz may also be used. There are also several downlink modulation schemes to choose from in accordance with the LTE standard, including QPSK, 16QAM, and 64QAM.

Mobile communications devices for use with the LTE standard are required to decode downlink channels consecutively or periodically as a function of the connection type, such as packet switched, circuit switched (voice), standby, or channel control. In order to decode the downlink channels, the mobile communications devices have to process the downlink signals in a manner that is related to the cell bandwidth. Several operations in a mobile communications device downlink receiver/decoder directly influence the downlink bandwidth dependent power consumption including but not necessarily limited to FFT, iFFT, control channel demodulation, and so on. In other words, a wideband downlink creates a greater computational load for the mobile communications device than does a narrowband downlink, and power consumption in the mobile communications device increases when the computational load increases.

Handovers Between Wideband and Narrowband LTE cells

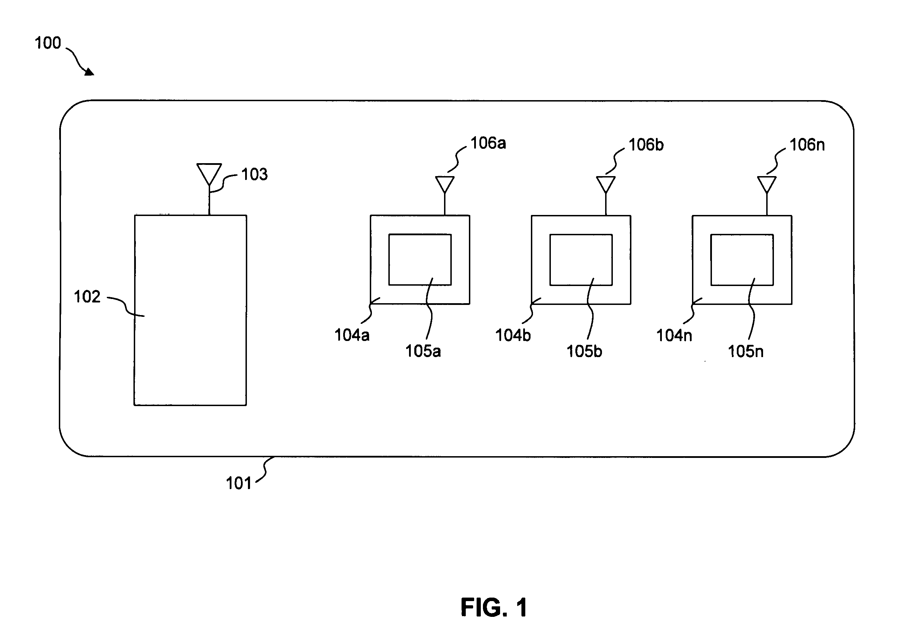

Referring to Fig. 1, a block diagram of an LTE mobile communication system **100** illustrates a base station **102** having an antenna subsystem **103** and a plurality of mobile communications devices **104a, 104b,** ..., **104n,** that wirelessly communicate with base station **102.** Outline **101** indicates that mobile communications devices **104a, 104b,** ..., **104n,** are within the coverage area of base station **102.** The shape of outline 102 is for illustrative purposes only, and do not necessarily reflect a physical map of the coverage area. Mobile communications device **104a** includes a computational resource **105a** that provides, among other things, signal processing (typically in the digital domain) of the downlink signals. Mobile communications device **104a** further includes an antenna subsystem **106a.** Similarly, mobile communications devices **104b** through **104n** include, respectively, computational resources **105b** through **105n,** and antenna subsystems **106b** through **106n.** In illustrative system **100,** mobile communications devices **104a, 104b,** ..., **104n** each wirelessly communicate with base station **102,** i.e., they are communicatively coupled by radio waves. In operation, it is common for one or more of the mobile communications devices to be in an idle mode, or in an operational mode that only requires a relatively low rate of data transfer. However, in order to provide services within the cell served by base station **102** where those services require a high rate of data transfer, base station **102** may be configured to operate in a wide bandwidth downlink. Consequently, all mobile communications devices registered within the cell served by base station **102** must process the wide bandwidth downlink signals of base station **102.** As noted above, more power is required within the mobile communications devices to process wide bandwidth signals than to process narrow bandwidth signals.

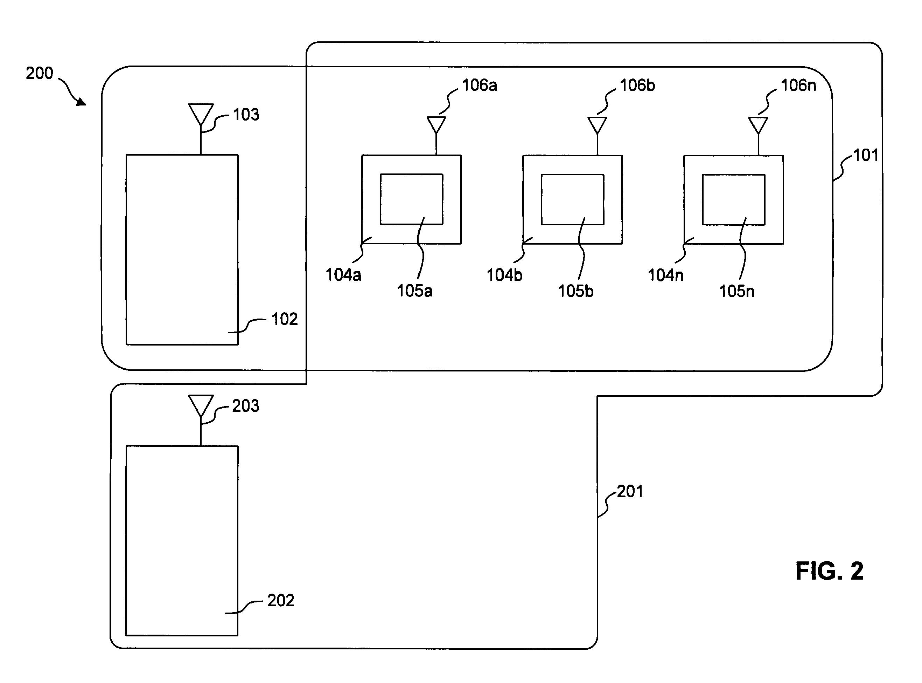

Fig. 2 is a block diagram of a mobile communication system **200** illustrating first base station **102** and a second base station **202** having an antenna subsystem **203.** Each of base stations **102, 202** provide a different downlink bandwidth. In this illustrative embodiment, base station **102** provides a wide bandwidth downlink (e.g., 20 MHz) in a coverage area **101,** and base station **202** provides a narrow bandwidth downlink (e.g., 1.4 MHz) in a coverage area **201.** It is noted that the shape of coverage areas **101** and **201** are for illustrative purposes and do not necessarily portray the physical boundaries of cell coverage areas, other than that the illustrated mobile devices are within the indicated coverage areas. Fig. 2 further illustrates a plurality of mobile communications devices **104a, 104b,** ..., **104n,** communicatively coupled to either first base station **102** or second base station **202.** Communicative coupling in this illustrative embodiment is accomplished wirelessly by radio waves.

In one illustrative embodiment, a first LTE cell (e.g., the area served by base station **102** which provides a wideband downlink), is overlapped by a second LTE cell (e.g., the area served by base station **202** which provides a narrowband downlink). The first wideband LTE cell (i.e., cell with a wide bandwidth downlink), directs the handoff, or handover, of mobile communications devices between itself and the second narrowband downlink LTE cell (i.e., cell with narrow bandwidth downlink). In this illustrative embodiment, the handoffs are based, at least in part, on the communication activity and/or data rate requirements of the mobile communications devices. Such an embodiment does not require any change to specifications of the LTE standard. A conventional hand off of the mobile communications device from a cell with a wide bandwidth downlink to a cell with a narrow bandwidth downlink, and vice versa, may be used.

In some embodiments, the narrowband cell can be configured to use the same antennas and resources as the wideband cell, thus providing cost effective implementations for network operators.

By way of example and not limitation, assume a femtocell providing a downlink with a 20 MHz bandwidth, thus supporting data rates up to 150 Mbps (in accordance with LTE standard Release 8) and serving twenty mobile communications devices according to the following distribution: ten are doing voice/VoIP, seven are web browsing/emailing, two are using multimedia services, and one is downloading files. In this case, at least seventeen mobile communications devices collectively do not need more than a simultaneous 1.5 Mbps bandwidth. These seventeen mobile communications devices may be referred to as operating in a low traffic mode, or similarly referred to as low traffic mobile communications devices. The bandwidth requirements of these seventeen low traffic mode mobile communications devices can be supported by the narrowest LTE downlink bandwidth (i.e., 1.4 MHz). Since the baseband processing requirements, or computational load, for communication with the narrow bandwidth cell is less than the processing requirements for communication with a wide bandwidth LTE cell, the power consumed in mobile communications devices is less when those mobile communications devices communicate with the narrow bandwidth cell. Thus having an LTE cell with a narrow bandwidth downlink that overlaps an LTE cell with a wide bandwidth downlink provides an advantage for the above-identified seventeen mobile communications devices, by allowing the mobile communications devices with low data rate requirements to be handed off to the cell with the narrow bandwidth downlink. Since those mobile communications devices processing the reduced computational load associated with the narrow bandwidth down link will have reduced power consumption, they will also have increased battery life.

In some embodiments, the LTE cell (i.e., base station) having the wide bandwidth downlink makes the determination to hand off a mobile communications device to the geographically overlapping narrow bandwidth LTE cell based, at least in part, on the data transfer rate requirements or the activities of that particular mobile communications device. In other embodiments, the LTE cell having the wide bandwidth downlink makes the determination to hand off a mobile communications device to the overlapping narrow bandwidth LTE cell based at least in part on a request for transfer from that mobile communications device. Similarly, the LTE cell with the narrow bandwidth downlink makes the determination to hand off a mobile communications device to the overlapping wide bandwidth LTE cell based at least in part on the data transfer rate requirements or the activities of that particular mobile communications device. In still other embodiments, the cell with the narrow bandwidth downlink makes the determination to hand off a mobile communications device to the overlapping wide bandwidth downlink cell based at least in part on requests for hand off to the wide bandwidth downlink cell. Such requests are received at the base station from that mobile communications device.

In the illustrative embodiment, an RRM in the base station of each of the cells acts to, among other things, direct mobile devices to the other cell per the user activities. So, mobile devices with low data rate requirements are directed to a cell with a narrow bandwidth downlink and mobile devices with high data rate requirements are directed to a cell with a wide bandwidth downlink. By way of example and not limitation, if one of the mobile devices using VoIP, and thus communicating with the cell having a narrow bandwidth downlink, needs to download files, that mobile device will be directed back to the cell with the wide bandwidth downlink. Similarly if a mobile device using multimedia stops its activity, then that mobile device will be directed to the narrowband cell. In some embodiments, a common RRM is provided for both cells.

It is noted that in addition to the twenty mobile communications devices referred to in the example above, other mobile communications devices within the cell(s) may be in standby mode. In various embodiments the mobile communications devices in standby mode will be directed to the narrowband cell.

In some embodiments, base station **102,** does not allocate resources on the same frequency bins as those used by base station **202.** In this way, inter-cell interference may be reduced. It is noted that in some embodiments, the wideband LTE cell and the narrowband LTE cell are not only collocated, but also synchronized. In this way, most of the inter-cell interference is avoided.

In one embodiment, the method of handoffs between wideband and narrowband LTE cells may be implemented in one or more integrated circuits, or chips. In some embodiments, two different bandwidth cells can be running using a single chip, or chip set, with the same antennas. The downlink bandwidths of the two different bandwidth cells may be selected from the group of downlink bandwidths specified in the LTE standard. In some embodiments, the one or more integrated circuits mentioned above may be designed to simultaneously transmit two LTE downlinks, i.e., two cells having different downlink bandwidths but overlapping and using only one RF chipset. In some embodiments, the management of the two cells may be provided in one common RRM software layer.

Dynamic Bandwidth Selection in LTE Cell

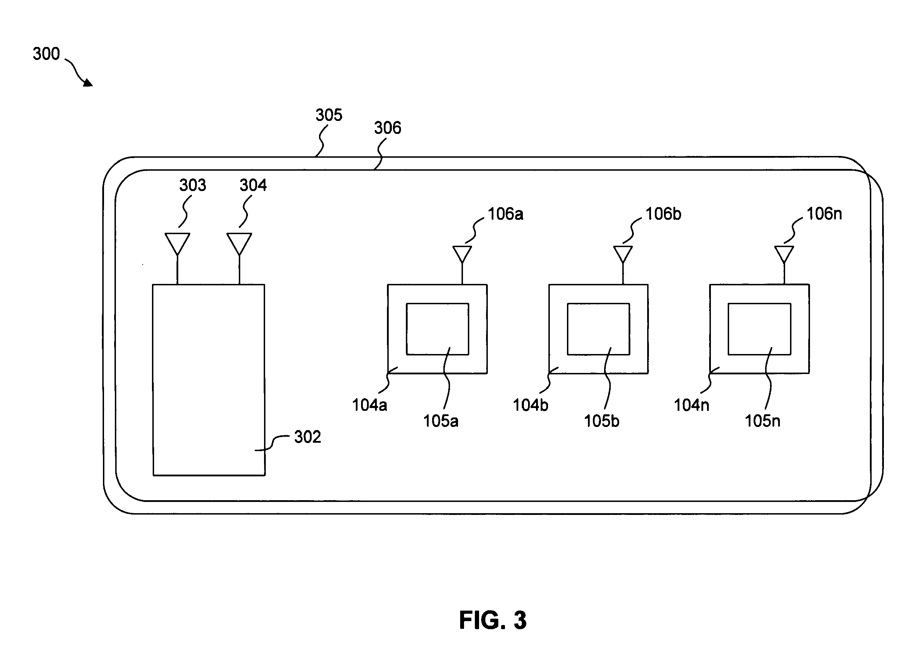

Referring to Fig. 3, a block diagram of an alternative embodiment of a mobile communication system **300** is illustrated. Fig. 3 shows a base station **302** having antennas **303, 304** for communicating over at least two separate air interfaces, wherein each of those air interfaces is operable to provide data rates that are different from each other because they provide different downlink bandwidths. Two illustrative coverage areas **305** and **306** are shown in Fig. 3, and coverage areas **305, 306** are substantially identical in this illustrative embodiment. Coverage area **305** is associated with antenna **303,** and coverage area **306** is associated with antenna **304.** Fig. 3 further shows a plurality of mobile communications devices **104a, 104b,** ... **104n** communicatively coupled to base station **302.** The communicative coupling takes place by way of radio waves between antennas **106a, 106b,** ..., **106n,** of mobile communications devices **104a, 104b,** ..., **104n** and base station **302.**

In an alternative approach to reducing power consumption in mobile communications devices, the LTE cell with which those mobile communications devices communicate dynamically changes its bandwidth in accordance with the data rate requirements of those mobile communications devices. In other words, rather than hand off a device from a narrow downlink bandwidth cell to a wide downlink bandwidth cell when there is a demand for greater data rates, the cell itself simply changes from one downlink bandwidth to another downlink bandwidth. Similarly, in this alternative approach, when the demand for downlink bandwidth decreases, the cell dynamically changes to a narrower downlink bandwidth. It is noted that this alternative approach may require a change to the specifications of the LTE standard. In one embodiment, this alternative approach is implemented by notifying the mobile communications devices over the cell's broadcast channel and/or over the cell's dedicated control channel, of the time at which the cell bandwidth is to be changed. In typical embodiments, the notification of the time at which the cell bandwidth is to be changed is the precise time at which the change will occur. In this way, all mobile communications devices and the cell will be synchronized regarding the instantaneous downlink bandwidth and bandwidth change of the cell.

Various embodiments in accordance with the present disclosure find application in mobile communication systems such as, but not necessarily limited to, mobile communication systems in accordance with LTE standard.

One advantage of embodiments in accordance with the present disclosure is that mobile communications devices consume less power in cases of low traffic. It is noted that typical usage patterns of mobile communications devices are dominated by low traffic modes of operation, thus the impact on battery life is substantial. Similarly, mobile communications devices consume less power in cases of low data rate or idle mode, and these scenarios also result in reduction of power consumption in accordance with the present disclosure.

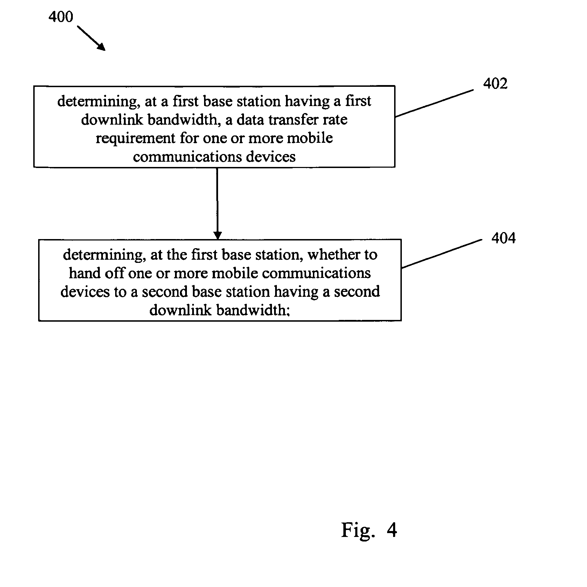

Referring to Fig. 4, in one illustrative embodiment, a method **400** of reducing power consumption in a mobile communications device includes at step **402** determining, at a first base station having a first downlink bandwidth, a data transfer rate requirement for one or more mobile communications devices; and at step **404** determining, at the first base station, whether to hand off one or more mobile communications devices to a second base station having a second downlink bandwidth; wherein the first downlink bandwidth and the second downlink bandwidth are different from each other. In some embodiments the first downlink bandwidth is greater than the second downlink bandwidth. In other embodiments the first downlink bandwidth is less than the second downlink bandwidth. In some embodiments, determining the data transfer rate requirement for one or more mobile communications devices includes monitoring the activity of the one or more mobile communications devices. For example, a base station can "see" that various mobile communications devices have low data transfer requirements, such as those devices that are in an idle mode, or are only being used for voice communication. In still other embodiments, determining whether to hand off one or more mobile communications devices to a second base station includes comparing the data transfer rate requirements of the one or more mobile communications devices to the first downlink bandwidth and the second downlink bandwidth. In this way, mobile communications devices with high data transfer rate requirements and currently registered with a narrow bandwidth cell may be handed off to a base station with a wide bandwidth downlink. Similarly, mobile communications devices with a relatively low data transfer rate requirement and currently registered with a wide bandwidth cell may be handed off to a base station with a narrow bandwidth downlink.

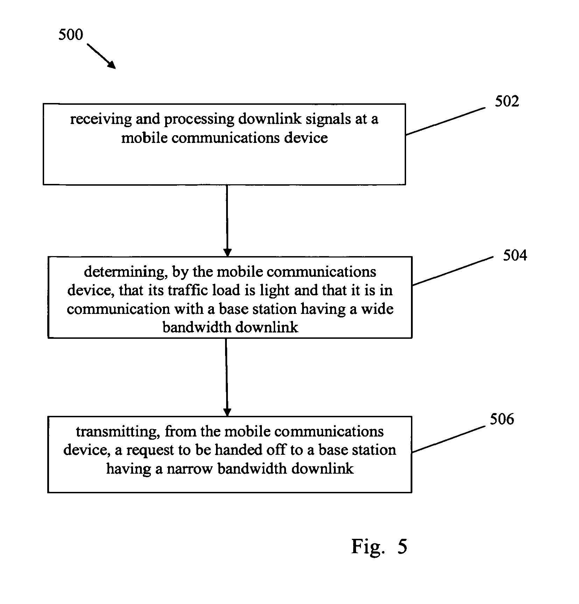

Referring to Fig. 5, in another illustrative embodiment, a method **500** of reducing power consumption in a mobile communications device includes a step **502** of receiving and processing downlink signals at a mobile communications device; a step **504** of determining, by the mobile communications device, that its traffic load is light and that it is in communication with a base station having a wide bandwidth downlink; and a step **506** of transmitting, from the mobile communications device, a request to be handed off to a base station having a narrow bandwidth downlink.

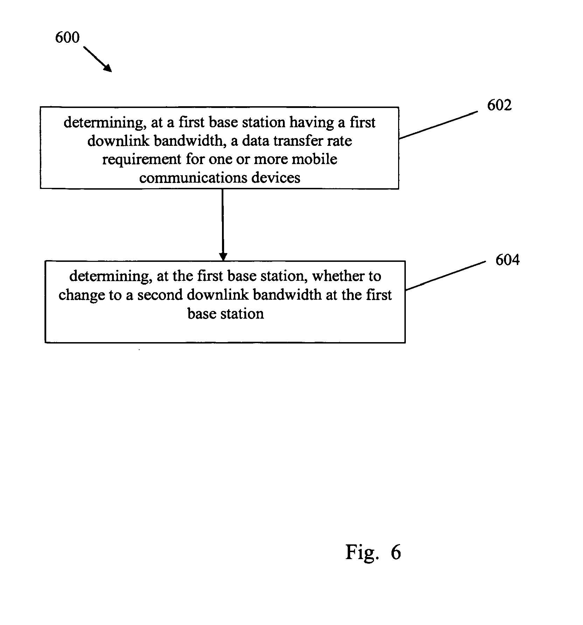

Referring to Fig. 6, in another illustrative embodiment, a method **600** of reducing power consumption in a mobile communications device includes a step **602** of determining, at a first base station having a first downlink bandwidth, a data transfer rate requirement for one or more mobile communications devices; and a step **604** of determining, at the first base station, whether to change to a second downlink bandwidth at the first base station; wherein the first downlink bandwidth and the second downlink bandwidth are different from each other.

Various embodiments of the invention may provide machine-readable storage, having stored thereon, a computer program having at least one code section executable by a machine, thereby causing the machine to perform the steps as described herein for determining the data transfer rate requirements of one or more mobile communications devices and determining whether to hand off one or more of the mobile communications devices to another base station with a different downlink bandwidth.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suitable. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

A computer program may be stored on a non-transitory computer readable medium such as CD, DVD, flash memory, or the like.

### CONCLUSION

It is to be appreciated that the Detailed Description section, and not the Abstract of the Disclosure, is intended to be used to interpret the claims. The Abstract of the Disclosure may set forth one or more, but not all, exemplary embodiments of the invention, and thus, is not intended to limit the invention and the subjoined Claims in any way.

It will be apparent to those skilled in the relevant art(s) that various changes in form and detail can be made therein without departing from the spirit and scope of the invention. Thus the invention should not be limited by any of the above-described exemplary embodiments, but should be defined only in accordance with the subjoined Claims and their equivalents.

## Claims

1. A method of reducing power consumption in a mobile communications device, comprising:
determining, at a first base station having a first downlink bandwidth, a data transfer rate requirement for a mobile communications device; and
determining, at the first base station, whether to hand-off the mobile communications device to a second base station having a second downlink bandwidth;
wherein the first downlink bandwidth and the second downlink bandwidth are different from each other.

2. The method of Claim 1, wherein the first downlink bandwidth is greater than the second downlink bandwidth.

3. The method of Claim 1, wherein the first downlink bandwidth is less than the second downlink bandwidth.

4. The method of Claim 1, wherein the first downlink bandwidth and the second downlink bandwidth are each selected from one of the downlink bandwidths specified in Release 8 of the LTE standard.

5. The method of Claim 1, wherein the first downlink bandwidth and the second downlink bandwidth are each selected from the group of downlink bandwidths consisting of nominally 1.4 MHz, nominally 3 MHz, nominally 5 MHz, nominally 10 MHz, nominally 15 MHz, nominally 20 MHz, and nominally 40 MHz.

6. The method of Claim 1, wherein determining the data transfer rate requirement for one or more mobile communications devices comprises monitoring the activity of the one or more mobile communications devices.

7. The method of Claim 1, wherein determining whether to hand off the mobile communications device to the second base station comprises comparing the data transfer rate requirements of the mobile communications device to the first downlink bandwidth and the second downlink bandwidth.

8. The method of Claim 7, further comprising:
handing off the mobile communications device from the first base station to the second base station;
wherein the second downlink bandwidth is less than the first downlink bandwidth.

9. The method of Claim 7, further comprising:
handing off the mobile communications device from the first base station to the second base station;
wherein the second downlink bandwidth is greater than the first downlink bandwidth.

10. The method of Claim 1, wherein a common Radio Resource Manager software layer manages at least some aspects of both the first base station and the second base station.

11. A method of reducing power consumption in a mobile communications device, comprising:
receiving and processing downlink signals at a mobile communications device;
determining, at the mobile communications device, that its traffic load is light and that it is in communication with a wide bandwidth cell; and
transmitting, from the mobile communications device, a request to be handed off to a narrow bandwidth cell.

12. The method of Claim 11, wherein the mobile communications devices are operable to process downlink signals at a plurality of downlink bandwidths, and a plurality of modulation schemes.

13. The method of Claim 11, wherein the plurality of downlink bandwidths comprises nominally 1.4 MHz, nominally 3 MHz, nominally 5 MHz, nominally 10 MHz, nominally 15 MHz, nominally 20 MHz, and nominally 40 MHz.

14. A method of reducing power consumption in a mobile communications device, comprising:
determining, at a first base station having a first downlink bandwidth, a data transfer rate requirement for a mobile communications device; and
determining, at the first base station, whether to change to a second downlink bandwidth at the first base station;
wherein the first downlink bandwidth and the second downlink bandwidth are different from each other.

15. A non-transitory computer-readable medium having stored thereon, a computer program having at least one code section executable by a machine, said at least one code section enabling:
determining, at a first base station having a first downlink bandwidth, a data transfer rate requirement for a mobile communications device; and
determining, at the first base station, whether to hand off the mobile communications device to a second base station having a second downlink bandwidth;
wherein the first downlink bandwidth and the second downlink bandwidth are different from each other.
